# EUROPEAN PATENT SPECIFICATION

(11) **EP 3 461 798 B1**
(45) Date of publication and mention of the grant of the patent: **22.01.2020**
(21) Application number: 18195038.7
(22) Date of filing: 18.09.2018
(51) Int. Cl.: C03B 35/16, F27D 25/00, B08B 1/00, B08B 1/04, B24B 5/37

(54) **ROLLERS CLEANING DEVICE**
ROLLENREINIGUNGSVORRICHTUNG
DISPOSITIF DE NETTOYAGE DE ROULEAUX

(30) Priority: 28.09.2017 IT 201700109013
(43) Date of publication of application: 03.04.2019
(73) Proprietor: KERAGLASS INDUSTRIES S.r.l., 42031 Baiso (RE) (IT)
(72) Inventor: Spezzani, Stefano, 42031 Baiso (RE) (IT)
(74) Representative: Grünecker Patent- und Rechtsanwälte PartG mbB

(56) References cited:
- EP-A1- 2 836 780
- EP-B1- 2 531 456
- CN-A- 104 829 106
- US-A- 5 853 318

## Description

### TECHNICAL FIELD

The present invention relates to a rollers cleaning device, in particular for roller conveyor planes. Moreover, the present invention relates to a rollers cleaning method.

### BACKGROUND

Roller conveyor planes, also called roller conveyors, by means of which objects of various nature are caused to advance along a given direction, are widespread in many technical sectors. A typical field in which roller conveyors are largely used is for example, the one of ovens for the heat treatment of glass sheets where the sheets are directly resting on the rollers.

Indeed, in the production cycle of glass sheets, such sheets are transported on roller conveyor planes, in particular for example, during the heat treatment in ovens.

The roller conveyor planes comprise a plurality of parallel rollers side-by-side along a conveying direction. At least some of the rollers are driven so as to ensure the sliding of the sheets resting thereon.

A particularly felt problem in all sectors of use is the difficulty with which the rollers forming the conveyor planes, are cleaned. The cleaning of the rollers is indeed performed manually by one or more operators who are to move along the whole conveyor plane to reach all rollers. In addition to being lengthy and laborious, the operation also involves a given dose of risk because the rollers are to be activated in rotation during the cleaning to allow an accurate cleaning of the whole surface of each roller.

The drawbacks described are significantly accentuated because there is a need to perform the cleaning of a roller conveyor plane placed in an oven for the heat treatment of glass sheets where the sheets are directly resting on the rollers. In this case, the oven indeed is to be turned off and cooled down almost to room temperature to allow access by the operators.

Two different rollers cleaning devices are known from the background art. One device is described in Italian Patent Application number 102010901805407.

Another device is instead known in European Patent number EP 2 400 246 B1. As is worth noting, the latter patent describes a device for treating rollers comprising locking elements 31 that allow keeping the apparatus in a permanent position with respect to the rollers 3 when such rollers are put into rotation about the respective axes of rotation.

The locking means 31 in such system are provided integrally with the support frame 4 of the rollers cleaning device 1. Therefore, vertically moving the position of the locking means 31 accordingly also moves the vertical position of the support frame 4. Indeed, skids 39 are provided to allow the rollers cleaning device 1 to be moved along the perpendicular direction with respect to the axis of rotation of the rollers (which coincides with the sliding direction of the glass sheets placed on the rollers), which skids are configured to be pushed against the rollers so as to ensure the sliding of the rollers cleaning system thanks to the raising of the locking means 31.

Indeed, by pushing the skids 39 against the rollers 3, the locking means 31, together with the frame 4, are moved upwards so that the locking means 31 are completely disengaged from the rollers 3 and thanks to the rolling of the rollers 3, the rollers cleaning device 1 may slide transported by the rolling of the rollers 3.

Nevertheless, such device has the significant disadvantage of requiring an increased movement of the support frame 4. This is due to the fact that the support frame 4 and the locking means 31 are provided integrally. Therefore, to ensure the raising of the locking means 31 and the disengagement thereof from the rollers 3, it is necessary to also raise the support frame 4 by a height at least equal to the coupling height of the locking means 31.

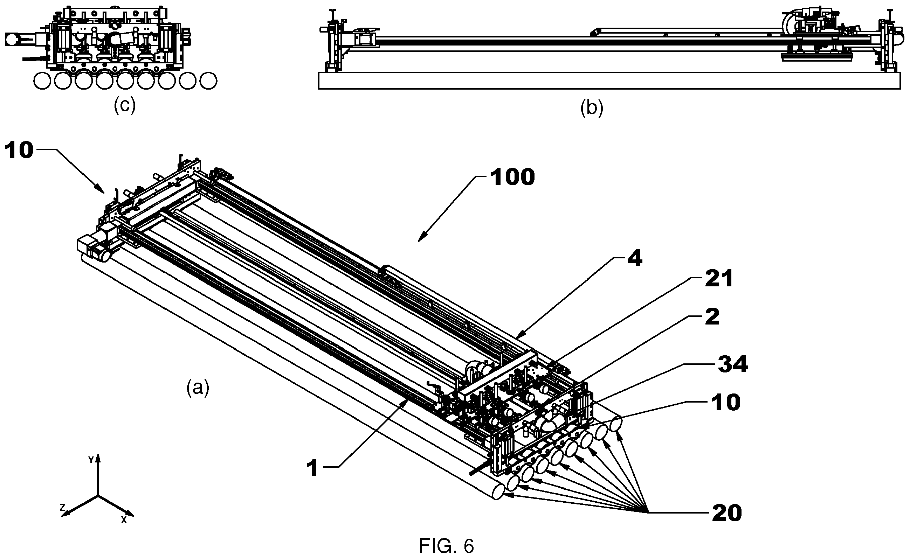

Indeed, as is shown in figure 6 of such patent, the locking means 31 comprise free rolling wheels 37' inserted between two successive rollers 3 that allow locking the positioning of the device 1 with respect to the rollers 3. To disengage the locking means 31 from the rollers 3, the wheels 37' are therefore to be completely disengaged from the rollers 3 and therefore raised up to having a lower end thereof positioned at a greater height with respect to the upper end of the rollers 3. Therefore, in the particular case represented in figure 6, such height of movement is greater than the radius of the wheels 37'. The greater such height of movement, the smaller the diameter of such wheels 37'.

Therefore, each time the device 1 is to be moved from one position to another along the axis Z, the whole support frame 4 is also to be moved by a predetermined length along the axis Y. This results in for example, the disadvantage that the position of all elements that are connected to the support frame 4, such as for example the cleaning means, are to be subjected to an upwards movement of significant extent. This also affects the overall volume of the device and therefore limits the use thereof in relation to the height of the tunnel of the production line in which the roller conveyor operates, for example of the oven for the heat treatment of the glass. Moreover, the significant extent of the vertical movement described results in the raising of the centre of gravity of the device and the subsequent instability of the device itself during the advancement along the roller conveyor. A similar apparatus is furthermore described in EP2836780 A1.

It is therefore the object of the present invention to provide a rollers cleaning device, in particular for roller conveyor planes, that allows cleaning the rollers in an easy and accurate manner without requiring an increased vertical movement of the support frame. It is also the object of the present invention to provide a rollers cleaning device that is particularly simple and less cumbersome with respect to the background art.

Further features and advantages of the present invention will be more apparent from the description of the accompanying drawings.

### SUMMARY

The present invention is based on the idea of making a rollers cleaning device in which the locking means are configured so as to be moved vertically with respect to the frame. This allows for example, releasing the movement of the locking means from the movement of the frame.

When reference is made to the axis X in the present invention, an axis parallel to the axis of rotation of a roller is meant. When reference instead is made to the axis Z, an axis perpendicular to the axis of rotation of a roller and parallel to a plane containing the axes of the rollers, is meant. When instead reference is made to the axis Y, an axis perpendicular to the axis of rotation of a roller and perpendicular to a plane containing the axes of the rollers, is meant. When reference is made to the vertical direction, a direction parallel to the axis Y is meant, while when reference is made to the conveying direction, a direction parallel to the axis Z is meant.

According to a particular embodiment of the present invention, a rollers cleaning device is provided comprising a support frame, cleaning means supported by the frame so as to be movable with respect to the frame and configured so as to be placed in contact with the rollers and to clean the outer surface thereof, one or more locking means configured so as to fix the frame in a predetermined position with respect to the rollers while the rollers are moved; the locking means are configured so as to be moved vertically with respect to the frame. This solution is particularly advantageous because it allows significantly reducing the extent of the vertical movement to which the support frame is subjected, which in this particular embodiment of the present invention preferably may be moved also only enough to come in contact with the rollers and then to be brought to a condition of non-contact with the rollers. Indeed, the fact that the locking means may be moved with respect to the frame implies that the movements of the two elements may be separate, and therefore the extent of the movement required to disengage the locking means is independent of the extent of the movement of the frame.

According to a particular embodiment of the present invention, a rollers cleaning device is provided in which the locking means are configured to be moved from a position of contact with the rollers to a non-contact position and vice versa. This solution is advantageous because it allows having locking means capable of locking the support frame in a firm manner thanks to the contact between the locking means and the rollers. Moreover, the fact of combining such feature with the vertical movement between the frame and the locking means allows having a firm locking but at the same time, allows reaching such locking by means of a minimum movement of the frame. Moreover, this solution is particularly advantageous because it allows significantly simplifying the device since there is no longer the need to have an additional element such as skids that allow the raising of the locking means. Indeed, thanks to the presence alone of the frame and of the locking means, it is possible to lock and release the device arranged on the rollers therefore without the need for a third additional element, such as the skids commonly used in the state of the art.

According to a particular embodiment of the present invention, a rollers cleaning device is provided in which the locking means and the frame are reciprocally moved in vertical direction by means of one or more actuators.

According to a particular embodiment of the present invention, a rollers cleaning device is provided in which the frame is positioned in a non-contact position with respect to the rollers while the locking means contact the rollers, and the locking means are positioned in a non-contact position with respect to the rollers while the frame is in contact with the rollers. This solution is particularly advantageous because during the sliding operations of the device along the axis Z, it allows the locking means not to affect such sliding. At the same time, thanks to the fact that the frame does not come in contact with the rollers when the locking means are positioned in position of contact with respect to the rollers, it is possible to prevent the rollers cleaning device from in some manner being subjected to movements along the conveying direction.

According to a particular embodiment of the present invention, a rollers cleaning device is provided in which the locking means comprise idle rotating elements that are configured to be inserted in the space between two adjacent rollers. This solution is particularly advantageous because it allows having very simple elements, such as for example wheels capable of remaining stationary despite the movement of the rollers, and therefore it allows ensuring the fixing of the frame in a predetermined position despite it being positioned above the rollers being moved.

According to a particular embodiment of the present invention, a rollers cleaning device is provided in which the frame has a flat bottom surface so that when the flat bottom surface is in contact with the rollers, the rollers cleaning device may be moved along the conveying direction of the rollers thanks to the rolling of the rollers themselves. This solution is particularly advantageous because it allows significantly simplifying the device since there no longer is the need to have an additional element (pair of skids) that allows the raising of the locking means and the sliding along the axis Z. Indeed, thanks to the fact that the bottom surface of the frame is flat, the frame itself causes the sliding of the device along the axis Z.

According to a particular embodiment of the present invention, a rollers cleaning device is provided in which the cleaning means comprise an arc-shaped cleaning element comprising an abrasive material and/or an electrostatic cloth positioned in the lower end portion of the cleaning means having an arc shape and configured to put in direct contact with the rollers so as to clean and/or polish the outer surface of the rollers. This solution is particularly advantageous because it allows having a surface in direct contact with the roller, thanks to the arc-shaped surface. Therefore, much less time is required to clean the outer surface of the rollers because a part of the rollers may be cleaned simultaneously thanks to the fact of having a cleaning element capable of simultaneously coming in contact with an extended surface of the roller.

According to a particular embodiment of the present invention, a rollers cleaning device is provided in which the cleaning means comprise an element with blades positioned in the lower end portion of the cleaning means and configured so as to be placed in direct contact with the rollers so as to eliminate foreign bodies positioned on the outer surface of the rollers. This solution is particularly advantageous because it allows removing foreign bodies very quickly, something which with the sole use of abrasive material, would otherwise require a lengthy smoothing step. Moreover, such cleaning element with blades preferably comprises a support with abrasive material and a support with blades, in which the support with blades comprises a blade positioned in the lower end portion thereof. Even more preferably, the support with abrasive material and the support with blades are placed in direct contact with the roller and are positioned symmetrically opposite with respect to a vertical axis passing through the centre of the cylinder.

According to a particular embodiment of the present invention, a rollers cleaning device is provided in which the cleaning means comprise at least two springs configured so as to allow an adjustment of the angulation of the cleaning element with respect to the rollers. This solution is particularly advantageous because it allows both absorbing the possible presence of foreign bodies that would otherwise compromise an increased rebound on the cleaning element, and it allows adjusting the angulation of the cleaning element therefore without the risk of affecting the roller itself.

According to a particular embodiment of the present invention, a rollers cleaning device is provided in which the locking means comprise a regulator configured so as to adjust the contact force of the cleaning means with the rollers. This solution is particularly advantageous because it allows preventing an excessive force of the cleaning means placed in contact with the outer surface of the roller. Moreover, it is also advantageous for the fact that it allows adjusting the force to be applied on the roller according to for example, the type of abrasive material used.

According to a particular embodiment of the present invention, a device for treating rollers is provided, adapted to subject rollers of a conveyor device to a maintenance operation to eliminate impurities and encrustations from an outer surface of the rollers, the device comprising locking means adapted to keep the device in permanent position resting on the conveyor device when the rollers are activated to rotate about the respective axes of rotation, in which the locking means comprise idle revolving elements adapted to be inserted between pairs of adjacent rollers; the device also comprises a frame provided with a cross-beam; cleaning means provided with a carriage movable along the cross-beam, with a cleaning element that is removably coupled with a support head; actuation means that are suitable for pushing the locking means with respect to the frame.

According to a particular embodiment of the present invention, a rollers cleaning method through a rollers cleaning device is provided, in which the rollers cleaning device is stopped at a predetermined position with respect to the rollers by lowering locking means with respect to the frame of the rollers cleaning device. This solution is particularly advantageous because it allows significantly reducing the quantity of vertical movement to which the support frame is subjected, which in this particular embodiment of the present invention may preferably be moved also only enough to come in contact with the rollers and then to be brought to a condition of non-contact with the rollers. Indeed, the fact that the locking means may be moved with respect to the frame implies that the movements of the two elements may be separate, and therefore the extent of the movement required to disengage the locking means is independent of the extent of the movement of the frame.

### BRIEF DESCRIPTION OF THE DRAWINGS

The present invention is described with reference to the accompanying drawings in which the same reference numbers and/or marks indicate the same parts and/or similar parts and/or corresponding parts of the system. In the drawings:
Figures 1a, 1b and 1c schematically illustrate a three-dimensional, side and front view of a rollers cleaning device according to one embodiment of the present invention;
Figures 2a and 2b schematically respectively illustrate a front view and a side view of cleaning elements according to a particular embodiment of the present invention;
Figure 3 schematically illustrates locking means according to a particular embodiment of the present invention;
Figures 4a, 4b, 4c respectively show a front, side and top view of an arc-shaped cleaning element according to one embodiment of the present invention;
Figures 5a, 5b, 5c respectively show a front, side and top view of a cleaning element with blades according to one embodiment of the present invention;
Figures 6a, 6b and 6c schematically show a three-dimensional, side and front view of a first state of the rollers cleaning method, using the device depicted in figure 1, according to a particular embodiment of the present invention;
Figures 7a, 7b and 7c schematically show a three-dimensional, side and front view of a state following the one depicted in figures 6a, 6b and 6c, of the rollers cleaning method, using the device depicted in figure 1, according to a particular embodiment of the present invention;
Figures 8a, 8b and 8c schematically show a three-dimensional, side and front view of a state following the one depicted in figures 7a, 7b and 7c, of the rollers cleaning method, using the device depicted in figure 1, according to a particular embodiment of the present invention;
Figures 9a, 9b and 9c schematically show a three-dimensional, side and front view of a state following the one depicted in figures 8a, 8b and 8c, of the rollers cleaning method, using the device depicted in figure 1, according to a particular embodiment of the present invention;
Figures 10a, 10b, 10c schematically show a three-dimensional, side and front view of a state following the one depicted in figures 9a, 9b and 9c, of the rollers cleaning method, using the device depicted in figure 1, according to a particular embodiment of the present invention;
Figures 11a, 11b, 11c schematically show a three-dimensional, side and front view of a longitudinal locking device on the rollers according to a particular embodiment of the present invention.

### DETAILED DESCRIPTION

The present invention is described hereinbelow by making reference to particular embodiments, as illustrated in the accompanying drawings. However, the present invention is not limited to the particular embodiments described in the following detailed description and depicted in the drawings, rather the embodiments described simply exemplify the various aspects of the present invention, the scope of which is defined by the claims. Further modifications and variations of the present invention will be apparent to those skilled in art.

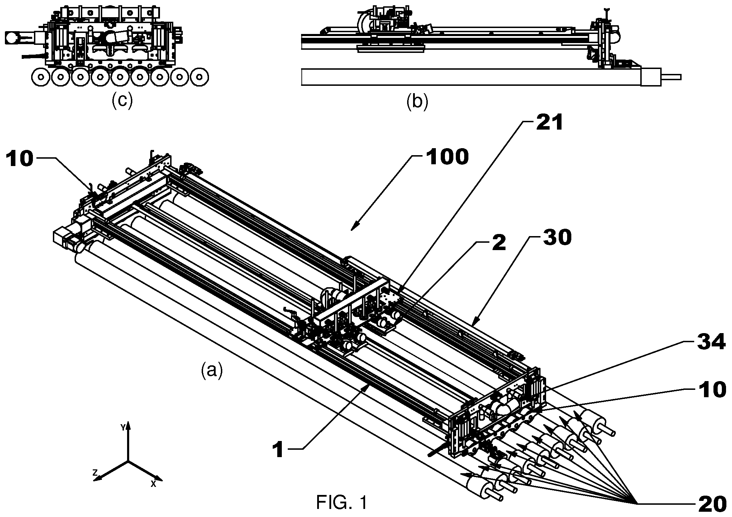

With reference to figures 1a, 1b and 1c, a rollers cleaning device 100 according to the present invention is briefly introduced.

As is shown in the drawing, the rollers cleaning device 100 is positioned on a roller conveyor that comprises a series of rollers 20 placed one after the other along a conveying direction Z, in which the rollers 20 have the axes parallel to one another so as to define the conveying direction Z.

Such device 100 comprises a support frame 1 configured so as to support and ensure the sliding of cleaning means 2 and two locking means 10, the operation of which is explained in greater detail later in the present description, which preferably are positioned at the two opposite ends of the rollers 20 along the axis X and are configured so as to fix the position of the frame 1 with respect to the rollers 20.

As is shown in the drawing, the cleaning means 2 comprise a carriage 21 configured to slide along two guides of the frame 1 so as to translate the cleaning means 2 along the axis X.

In the example depicted in the drawing, the sliding of the carriage 21 along the axis X is ensured by movement means 30, such as for example a drive belt, that transmit the translation motion along the axis X to the carriage 21. Thereby, the cleaning means 2 may be caused to slide freely between the two locking means 10 which as said, preferably are positioned at the two opposite ends of the rollers 20 so as to clean the rollers 20 substantially along the whole length thereof.

It is apparent that although two sliding guides on which the carriage 21 of the cleaning means 2 may be caused to slide are depicted in the particular example depicted in figures 1a, 1b and 1c, such number of guides is non-limiting. Indeed, in the case for example of cleaning means capable of simultaneously cleaning the outer surface of a larger number of rollers (and therefore with a greater extension of the carriage 21 along the axis Z), more than for example two sliding guides may be used.

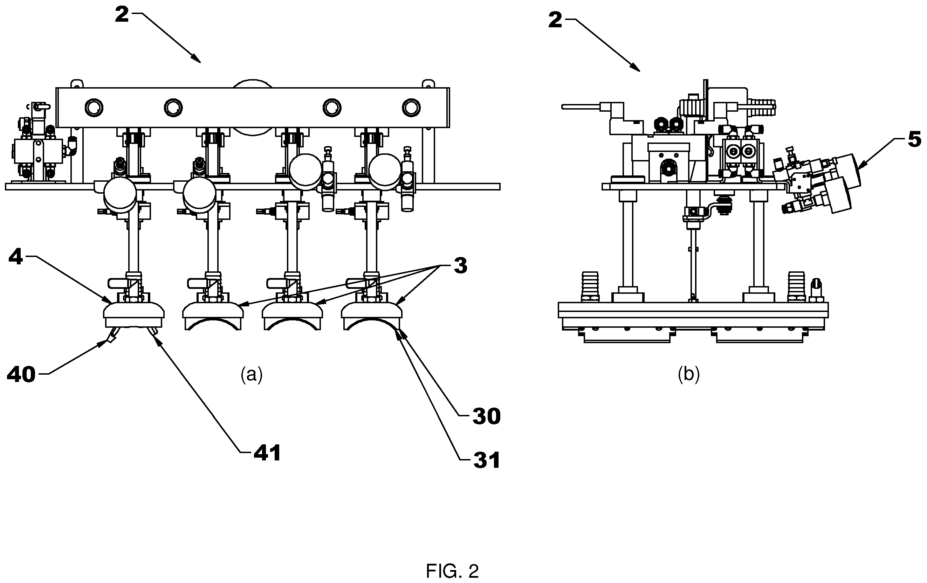

With reference to figures 2a and 2b, a cleaning means 2 is described in greater detail. Figure 2 shows a front view of the cleaning means 2 obtained on a plane perpendicular to the axis X, while figure 2b shows a side view (from the left in figure 2a) of the cleaning means 2.

In the particular example depicted in the drawing, a cleaning means 2 is depicted, having four cleaning elements of two different types 3 and 4.

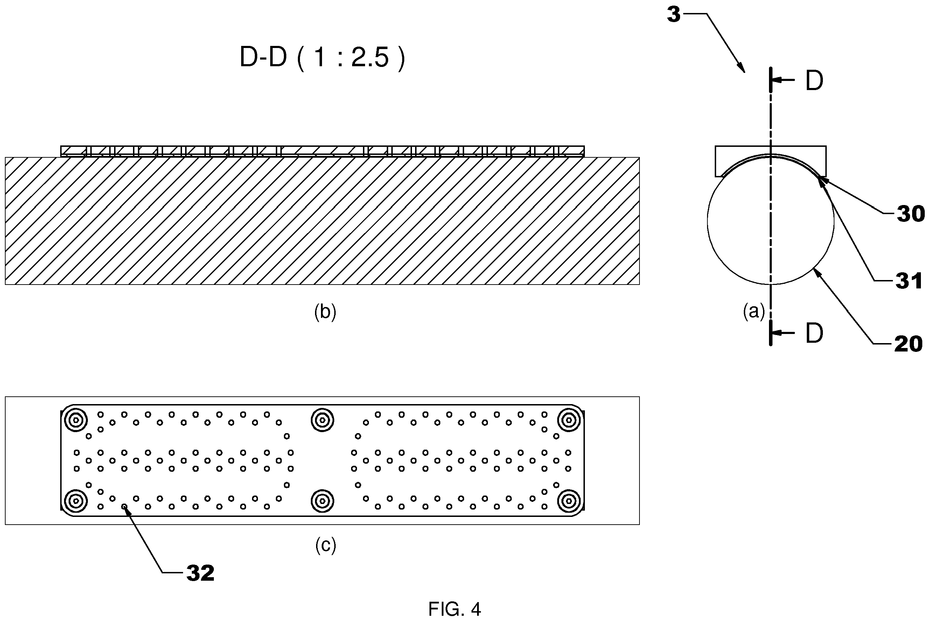

The cleaning elements depicted with the reference number 3 depict an arc-shaped cleaning element 3 that has an arc-shaped lower end on which there is removably installed a layer of abrasive material 31, or alternatively an electrostatic cloth, capable of allowing the cleaning and the polishing of the rollers, and which is described in greater detail with reference to figures 4a to 4c.

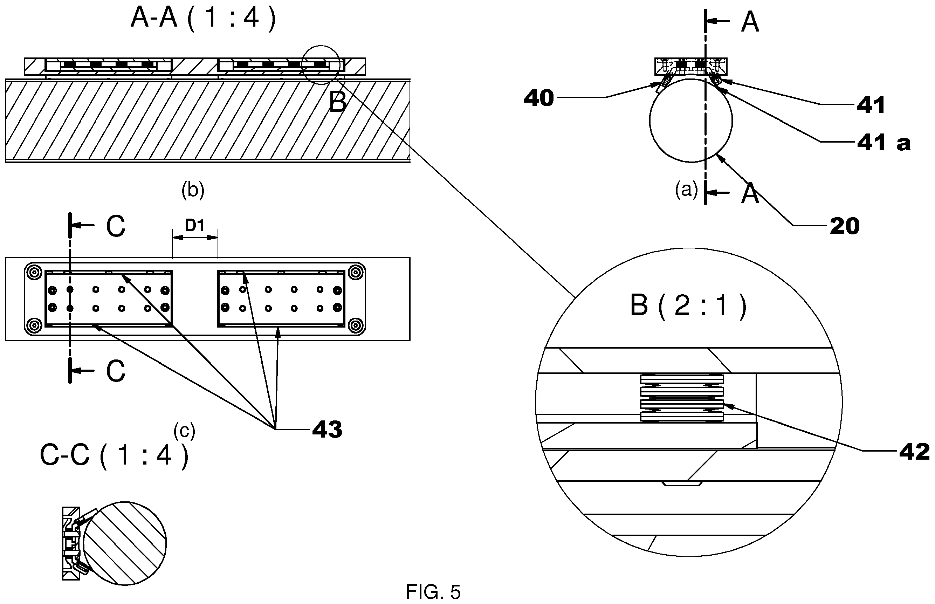

The cleaning element depicted with reference numeral 4 instead depicts a cleaning element 4 with blades capable of eliminating foreign bodies such as for example, small glass shards stuck to the rollers 20, and which is described in greater detail with reference to figures 5a to 5c.

As mentioned, such cleaning means 2 have a carriage 21 configured so as to move the cleaning means along the axis X to clean the rollers 20 being moved along the longitudinal extension thereof. Moreover, the cleaning means 2 may comprise a motor means, such as for example an actuator, configured so as to ensure a translation of the cleaning elements 3 and 4 along the axis Y so as to move the cleaning elements 3 and 4 from a position of contact with the rollers 20 to a non-contact position and vice versa.

Moreover, as shown in the side view in figure 2b, the cleaning means 2 comprise a pressure regulator 5 configured so as to adjust the force acting on the cleaning elements 3 and 4 and therefore the pressure of the cleaning elements 3 and 4 acting on the rollers 20. Therefore, such pressure regulator 5 is capable of adjusting the pressure of each cleaning element 3 and 4 acting on the rollers 20 in an independent manner. However, in the case one pressure regulator 5 alone is installed, the same pressure may be provided to each of the cleaning elements 3 and 4.

As mentioned, the movement of the cleaning means 2 along the axes X and Y is ensured by motor means capable of translating the carriage 21 along the axis X and of moving the cleaning elements 3 and 4 along the direction Y and therefore of coming in contact with the rollers 20.

Thus, the cleaning means 2 may be freely moved along the axis X and Y independently of the movement of the support frame 1 by which they are supported.

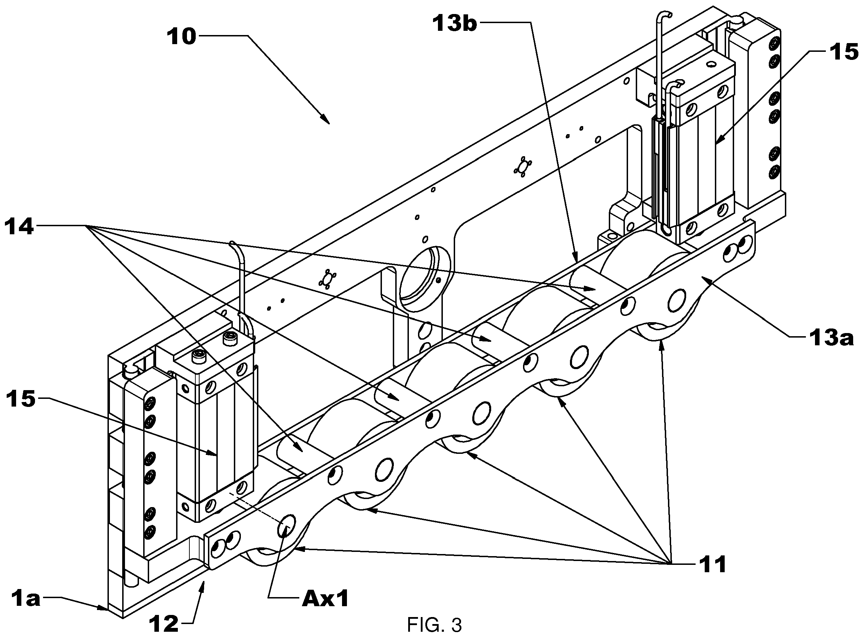

With reference to figure 3, the operation of the locking means 10, and therefore of how the cleaning means 2 together with the carriage 21 may be moved along the axis Z, is described in detail.

Since as mentioned, the device comprises two similar locking means, in order not to repeat the same description twice, the operation of only one of them is described and the other locking element 10 preferably has the same features as the one herein described.

As shown in the drawing, the locking means 10 comprise idle rolling elements, which in this example are represented by wheels 11. There are five wheels 11 in the present example; they are rotatably fastened to a structure 12 comprising a front face 13a facing towards an outer zone of the support frame 1 and a rear face 13b facing towards an inner zone of the support frame 1. The two faces 13a, 13b are positioned along the axis Z and are kept at a predetermined distance that is greater than or equal to the depth of the wheels 11 (along the axis X) by means of the use of cross-beams 14 positioned at given intervals along the extension of the two faces 13a and 13b along the axis X.

The axis of rotation Ax1 of the wheels 11 is constrained to the two faces 13a and 13b, while the wheels 11 are free to idly rotate by means of bearings.

The structure 12 is connected to movement means 15 positioned at the right and left end along the axis Z of the structure 12. Such movement means 15 are therefore connected on one side to the structure 12 that supports the wheels 11 and on the other, to the support frame 1.

Therefore, thanks to the movement of the movement means 15, it is possible to move the positioning of the wheels 11 with respect to the support frame 1. Such movement means 15 may be represented for example, by an actuator.

As shown in the drawing, the support frame 1 has a lower end 1a having a flat surface.

Thereby, when the lower end of the rollers cleaning device 100 is represented by the flat lower end 1a of the support frame 1, the device 100 may be translated along the direction Z thanks to the rolling of the rollers 20 on which it is placed.

Alternatively, in the case in which the lower end of the rollers cleaning device 100 is represented by wheels 11, such wheels, which are free to rotate about their own axis Ax1, allow the rollers cleaning device 100 to remain in a permanent position with respect to the rollers 20 in rotation because the movement of the rollers is transferred to the wheels 11, which being free to rotate, may remain in permanent position.

Therefore, the movement means 15 are configured so as to alternate a step in which the wheels 11 occupy the lower part of the rollers cleaning device 100 and a step in which the lower end instead is occupied by the flat surface 1a of the support frame 1.

As mentioned, the rollers cleaning device 100 preferably comprises two locking means 10 positioned at the two opposite ends along the axis X of the rollers 20 so as to effectively lock the position of the rollers cleaning device 100 with respect to the rollers 20. The two locking means are controlled so that the movement means 15 preferably act with the same movements simultaneously.

The number of wheels 11 is dependent on the number of rollers 20 that are simultaneously cleaned and therefore on the number of cleaning elements 3 and 4 of the cleaning means 2. In this case, since there are four cleaning elements, preferably there are five wheels. The number of wheels is indeed preferably equal to the number of rollers plus 1.

With reference to figures 4a-4c, an arc-shaped cleaning element 3 having an abrasive material, or an electrostatic cloth, positioned at the lower end of it, capable of cleaning and polishing rollers 20, is described.

Figure 4a shows a front view on a plane perpendicular to the axis of the roller 20 of the arc-shaped cleaning element 3 in a state of contact with the outer surface of the roller 20.

Therefore, when the arc-shaped cleaning element 3 is put in contact with the outer surface of the roller 20, part of the surface of the roller 20 is in direct contact with the abrasive material 31 or with the electrostatic cloth.

Therefore, by means of the pressure regulator 5 it is possible to adjust the force with which the abrasive material or the electrostatic cloth 31 cleans and polishes the outer surface of the rollers 20. Such pressure may be for example, adjusted according to the type of material used, for example according to the level of fineness of the abrasive material 31 used.

While the arc-shaped cleaning element 3 is in contact with the roller 20, the latter is configured so as to rotate about its own axis so that the whole outer surface of the roller 20 may be cleaned and polished by the arc-shaped cleaning element 3.

To allow the dust generated during the cleaning and polishing process of the rollers 20 to be effectively removed from the outer surface of the roller 20, holes 32 are made in the cleaning element 3 for the suction of the dust.

Indeed, as shown in figure 1, the dusts removed from the roller 20 are sucked by means of a suction fan and ducts up to the outlet of the tube 34 positioned at the locking means 10, through an extensible tube.

With reference to figures 5a-5c, a cleaning element 4 with blades is described, having blades configured so as to eliminate foreign bodies, such as glass shards stuck to the rollers 20.

The cleaning element 4 with blades has a lower end on which there are mounted a support with abrasive material 40 and a support 41 with blades. These two supports 40 and 41 are positioned so that one end thereof may rest on the outer surface of the roller 20.

Therefore, as shown in the drawing, the two supports 40 and 41 are positioned in symmetrically opposite manner with respect to the vertical axis passing through the centre of the roller 20. In the example shown in figure 5a, the roller is caused to rotate preferably in anti-clockwise direction so that possible foreign bodies on the outer surface of the roller 20 are detached from the blade 41a of the support 41 with blades.

Moreover, the presence of the support 40 with abrasive material allows cleaning and polishing the outer surface of the rollers 20, but at the same time also ensures a stability of the cleaning element 4 with blades, thus allowing the blade 41a to remain in contact with the outer surface of the roller 20.

Indeed, as shown in detail B in figure 5b, the two supports 40 and 41 are mounted on springs 42 that allow the blade 41a to keep an adequate angulation with respect to the roller 20, thus effectively reducing the possibility of damaging the roller 20 itself by cutting it. Moreover, in the case in which a foreign body comes in contact with the blade 41a of the support 41 with blades, the springs 42 allow an easing of the knock.

As for the arc-shaped cleaning element 3, slits 43 are installed also for the cleaning element 4 to allow the suction of possible foreign bodies on the outer surface of the roller 20 that are detached by means of the blade 41a.

As shown in figure 5c, the cleaning element 4 with blades preferably is divided in two elements placed at a distance D1 from each other so as to have a shorter blade 41a along the axis X and therefore having increased flexibility.

As described above concerning figure 2a, the cleaning means 2 preferably comprise a cleaning element 4 with blades and three arc-shaped cleaning elements 3. Indeed, in case the rollers cleaning device 100 is moved along the axis Z of one roller at a time, it is possible to subject each roller 20 to a cleaning sequence with four different materials, thus having an effective cleaning of the rollers 20.

Starting from the side downstream (with respect to the conveying direction Z) of the carriage 21, preferably there is a cleaning element 4 with blades, an abrasive cleaning element 3, another abrasive cleaning element 3 with finer grain and finally, an element 3 with electrostatic cloth.

Thereby, if the device 100 is caused to advance along the axis Z of one roller at a time, each roller 20 is treated in sequence with all four cleaning elements. The first cleaning element 4 with blades removes possible foreign bodies on the outer surface of the roller 20, the second and third abrasive cleaning elements 3 clean and polish the outer surface of the roller, while the fourth cleaning element 3 with electrostatic cloth effectively removes the dusts still on the outer surface of the roller 20.

Since in this way the first three rollers and the last three rollers of the roller conveyor are not treated with all the cleaning elements described above, they may be treated by holding the device 100 and manually inverting the positions of the cleaning elements.

Alternatively, another possibility is the one of using the same cleaning element simultaneously on all four cleaning elements, thus causing the device 100 to advance by four rollers at a time. Thereby, once the cleaning of all the rollers of the roller conveyor with a given cleaning element is complete, the cleaning element is changed, and the cleaning is completed of the whole roller conveyor with the cleaning element and so on until all the cleaning elements necessary for the cleaning are used.

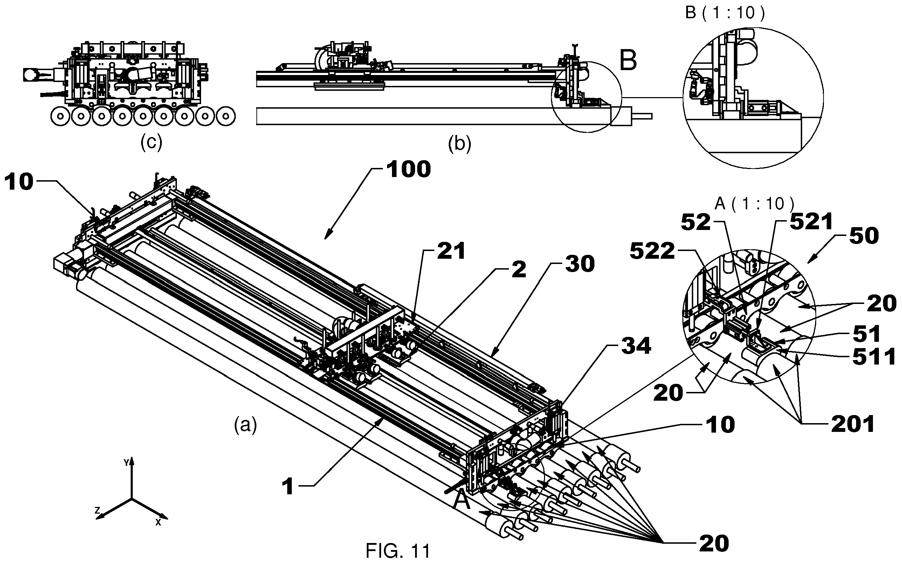

Figure 11a-11c shows a longitudinal locking device on the rollers 50 that is connected to the rollers cleaning device 100, which is configured so as to lock the movement of the rollers cleaning device 100 along the longitudinal axis (axis X).

Indeed, during the cleaning operations, it is possible for the device 100 to be subjected to movements along the axis X since there are no constraints that hold it stationary along the axis X. Such device therefore prevents such movements.

The device 50 is positioned on one side of the rollers cleaning device 100 at the locking means 10. As shown in figure 11a-11c, the device 50 comprises an end 51 having a lower arc-shaped profile so as to come in contact with a portion of the outer surface of the roller 20. The end 51 is connected to a movement arm 52, which is configured so as to move the end 51 both along the axis X and along the axis Y by means of movements that are explained below.

The end 51 is configured so as to be placed in contact with the bushing 201 of the roller 20 and pressed against it. Indeed, when the end 51 is pressed against the bushing 201, the rollers cleaning device 100 may be effectively stopped along the axis X due to the fact that the end 51 is connected to the frame 1 through the movement arm 52, and that therefore the movement of the frame 1 against the bushing 201 is effectively hindered due to the forces that come into play during the cleaning of the rollers 20 between the cleaning means 2 and the rollers 20.

As mentioned, the end 51 may be moved along the axes X and Y by means of the movement arm 52. In an initial state, the arm 52 preferably is in a vertical position (parallel to the axis Y). Then the arm 52 is rotated until it reaches a horizontal position parallel to the axis X, that is until the end 51 comes in contact with a portion of the outer surface of the roller 20. Then the arm 52, which preferably has an actuator therein, is extended so as to move the lower 522 and upper 521 portions of the arm 52 away from each other until an end portion 511 of the end 51 comes in contact with the bushing 201 which, as shown in the figure, has a greater diameter than the roller 20. After the cleaning process is complete and the rollers cleaning device 100 is moved along the axis Z, the device 50 is brought back to the beginning position, as explained in detail below.

Moreover, although two devices 50 like the ones herein described would be required to keep a permanent position of the rollers cleaning device 100 along the axis X, in which each of said devices is positioned at one of the two locking means 10, the inventor has discovered that it is possible to prevent the movement of the rollers cleaning device 100 along the axis X also by means of the installation of one device 50 alone.

Indeed, it has been noted that the movement direction of the rollers cleaning device 100 during the cleaning operation normally is always the same and that it coincides with the movement towards the long side axis X, where the wiring is and therefore which is heavier.

Therefore, after the locking means 10 have positioned the rollers cleaning device 100 in a given position with respect to the rollers 20, it is preferable to have a device 50 like the one herein described and for the longitudinal locking on the rollers, to position the end 51 of the device 50 against the bushing 201 of a roller 20 until the cleaning operations of those given rollers on which the cleaning means 2 are positioned, are completed.

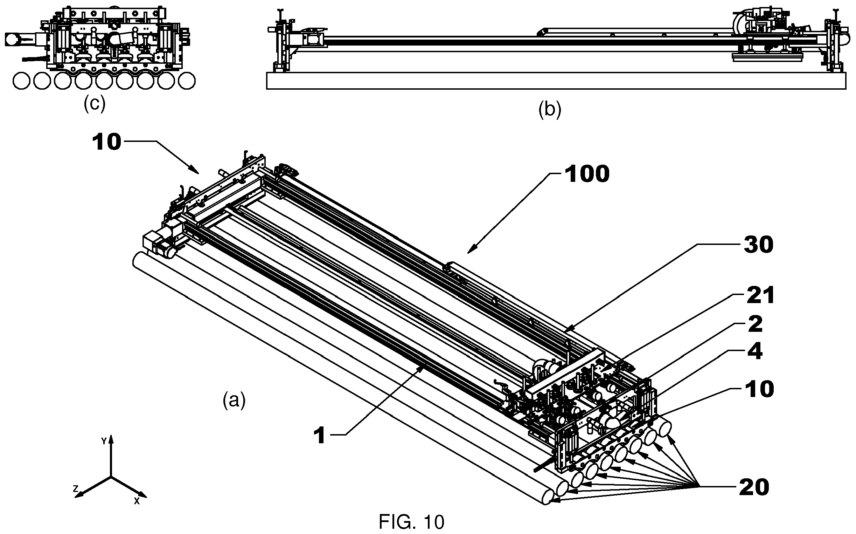

With reference to figures 6 to 10, there is described a cleaning method by means of the rollers cleaning device 100 described above.

Figures 6a-6c show a state in which the rollers cleaning device 100 is fixed in a given position with respect to the rollers 20 thanks to the locking means 10 that are positioned in direct contact with the rollers 20. Indeed, each wheel 11 is placed in direct contact with two rollers 20 so that each wheel 11 remains in the same position even if the rollers 20 are placed in rotation about their own axis, thus allowing the locking of the rollers cleaning device 100.

In this initial state, the cleaning elements 3 and 4 are positioned in a non-contact position with the rollers 20. Even though it is not depicted, in the case in which the device 100 has a device 50 for the longitudinal locking on the rollers like the one described above, the device 50 for the longitudinal locking on the rollers has the end 51 in contact with the bushing 201 of a roller 20 in this state (described in figures 6a-6c).

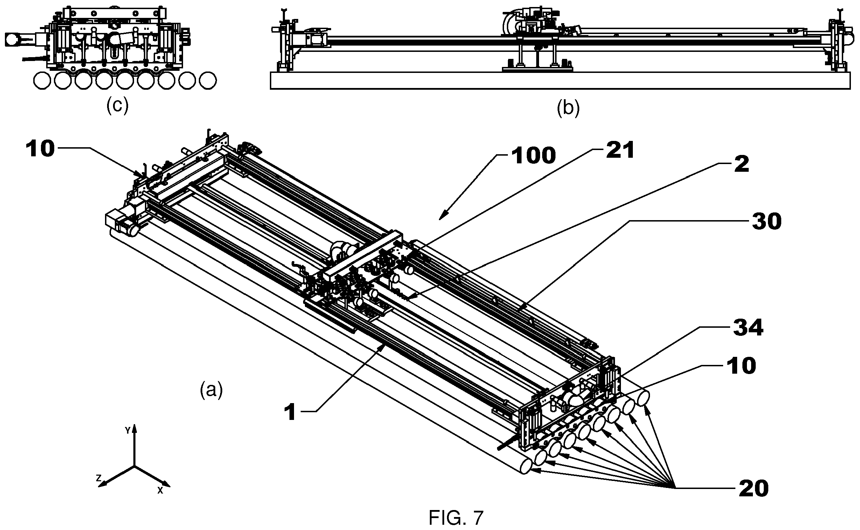

In a successive state shown in figures 7a-7c, the cleaning elements 3 and 4 are lowered and positioned in contact with the outer surface of the rollers 20 so as to clean the outer surface of the rollers 20. Moreover, thanks to the translation of the carriage 21 of the cleaning means 2 along the axis X, the outer surface of the rollers 20 may be cleaned substantially along the whole length of the roller.

Indeed, while the carriage 21 is caused to slide along the axis X, the rollers are caused to rotate about the axis thereof so that the whole outer surface of the rollers 20 may come in contact with the cleaning elements 3 and 4 and so that the whole outer surface of the rollers 20 may be cleaned.

The cleaning of the outer surface of the rollers 20 may be considered concluded after for example, the carriage 21 is moved along the axis X up to reaching the opposite end with respect to the starting end and is then returned to the starting position, having travelled the length of the roller 20 twice: an outbound path and a return path. However, it is apparent that to have improved cleaning, such process may also be repeated several times: for example, the carriage 21 may travel the length of the roller three or more times. It indeed is not necessary for the carriage 21 to return to the starting position before the outer cleaning of the rollers may be considered concluded.

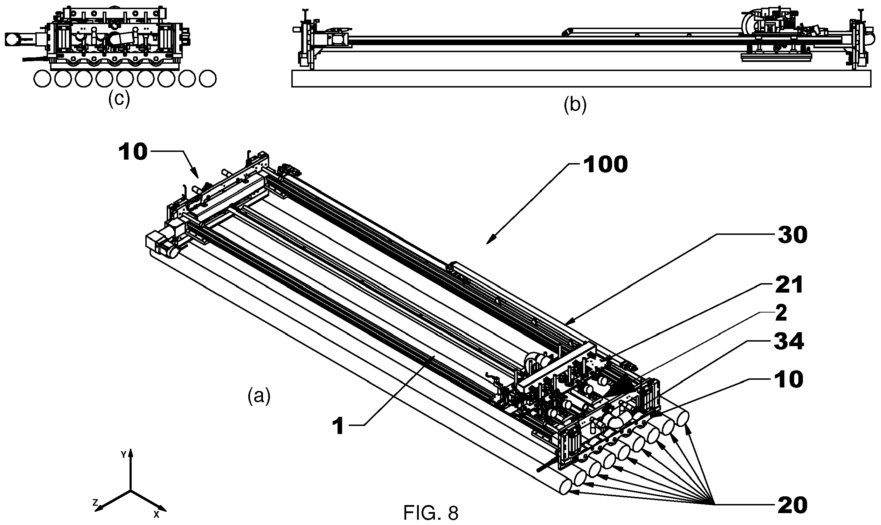

After the outer surface of all rollers has been cleaned (as shown in figures 8a-8c), the cleaning elements 3 and 4 are raised and detached from the outer surface of the rollers 20 and the rollers cleaning device 100 is moved along the axis Z. Even though it is not depicted, in the case in which the device 100 has a device 50 for the longitudinal locking on the rollers like the one described above, the device 50 for the longitudinal locking on the rollers brings the end 51 in a vertical position of non-contact with the bushing 201 of a roller 20 in this state (described in figures 8a-8c).

The extent of the raising of the cleaning elements 3 and 4 also takes into consideration that in the release process of the locking means 10, the support frame 1, and therefore also the cleaning means 2 connected thereto, are lowered by a given measurement along the vertical axis until the flat bottom surface 1a of the frame 1 comes in contact with the rollers 20.

As described above, to ensure the movement of the rollers cleaning device 100 along the axis Z, the movement means 15 are configured to move the locking means 10 with respect to the support frame 1.

Therefore, by raising the locking means 10, the wheels 11 are detached from the rollers 20 thus being completely disengaged, and the bottom flat surface 1a of the support frame 1 comes in contact with the rollers 20 which, thanks to the rotation thereof, may convey the rollers cleaning device 100 along the axis Z.

This solution is highly advantageous because it allows decoupling the extent of the movement of the locking means 10 and the extent of the movement of the frame 1. Indeed, other devices of the state of the art are configured so that the support frame and the locking means move together. However, with these devices the frame is to be significantly raised because it is to allow the complete disengagement of the locking means from the rollers. Instead, as shown in figures 8a-8c, it is sufficient in the present invention to raise and lower the support frame 1 by a significantly reduced measurement with respect to the one of the background art thanks to the fact that the extent of the movement of the two elements is decoupled.

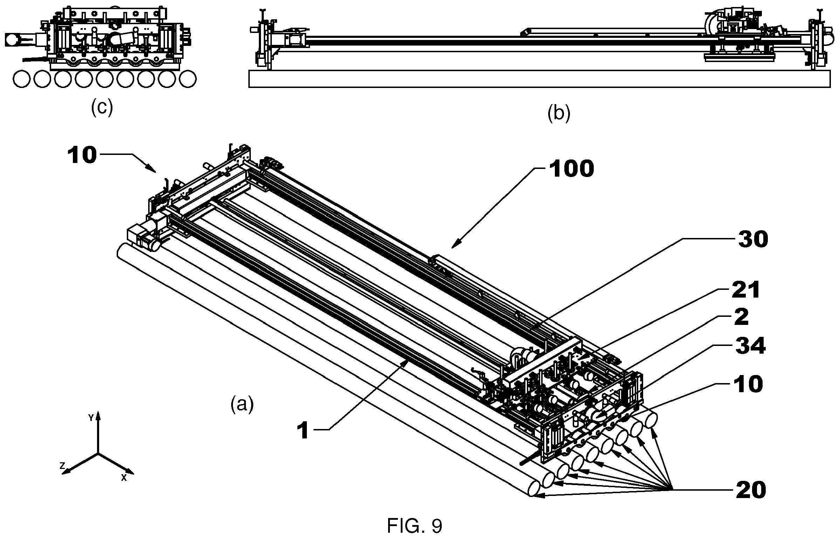

In a successive step described in figures 9a-9c, the raised wheels 11 allow the rollers cleaning device 100 to be translated by means of the rotation of the rollers 20, along the direction Z until reaching a predetermined position. When such position is reached, the locking means 10 are caused to be moved downwards so as to come in contact with the rollers 20 and lock the device 100 with respect to the rollers 20 while the support frame 1 is simultaneously raised. As mentioned, such raising and lowering operations are carried out by means of the movement means 15.

It is apparent that preferably the lowering of the locking means 10 is started before the reaching of the final position because the lowering process of the locking means 10 has a well-defined duration and since the rollers 20 preferably are kept in movement during such process, it is preferable to calculate the moment in which the lowering of the locking means 10 is to be started so as to reach the predetermined final positioning.

As mentioned, the extent of the movement along the axis Z of the device 100 preferably is equal to the distance between two adjacent rollers in the particular case depicted in figure 2a. Or, in the alternative case of the simultaneous installation of four equal cleaning elements, there is preferably a movement along the axis Z equal to four times the distance between two adjacent rollers. It is apparent for example, that in the case in which four cleaning elements of two different types placed in pairs of two are installed on the cleaning means, there similarly could be a movement along the axis Z equal to twice the distance between two adjacent rollers.

Although the present invention was described with reference to the embodiments described above, it is apparent to an expert in the field that it is possible to make several modifications, variants and improvements to the present invention in light of the above teaching and within the scope of the appended claims, without departing from the object and the scope of protection of the invention.

For example, although it was described in the present invention that the idle rolling elements are represented by wheels, it is apparent that elements may alternatively be used such as rods having a low friction coefficient, configured so as to be inserted between two successive rollers.

Moreover, even though cleaning means having four cleaning elements were described in the present invention, it is possible for the number of cleaning elements also to be less or greater than four, according to the size of the device.

Finally, those fields known by experts in the field were not described to avoid excessively and uselessly overshadowing the invention described.

Accordingly, the invention is not limited to the embodiments described above, but is only limited by the scope of protection of the appended claims.

## Claims

1. A rollers cleaning device (100) comprising:
a support frame (1);
cleaning means (2) supported by said frame (1) so as to be movable with respect to said frame (1) and configured so as to be put in contact with the rollers (20) and to clean the outer surface thereof;
one or more locking means (10) configured so as to fix said frame (1) in a predetermined position with respect to the rollers (20), while the rollers (20) are moved;
said rollers cleaning device (100) **characterized in that**
said locking means (10) are configured so as to be moved vertically with respect to said frame (1).

2. The rollers cleaning device (100) according to claim 1, wherein said locking means (10) are configured to be moved from a position of contact with the rollers (20) to a non-contact position and vice versa.

3. The rollers cleaning device (100) according to one of claims 1 or 2, wherein said locking means (10) and said frame (1) are reciprocally moved in a vertical direction (Y) by means of one or more actuators (15).

4. The rollers cleaning device (100) according to one of claims 1 to 3, wherein while said locking means (10) contact the rollers (20), said frame (1) is positioned in a non-contact position with respect to the rollers (20), and while said frame (1) contacts the rollers (20), said locking means (10) are positioned in a non-contact position relative to the rollers (20).

5. The rollers cleaning device (100) according to one of claims 1 to 4, wherein said locking means (10) comprise idle rotating elements (11) which are configured to be inserted into the space between two adjacent rollers (20).

6. The rollers cleaning device (100) according to one of claims 1 to 5, wherein said frame (1) has a flat bottom surface (1a) so that when said flat bottom surface (1a) contacts the rollers (20), said rollers cleaning device (100) can be moved along the conveying direction (Z) of the rollers by rolling said rollers (20).

7. The rollers cleaning device (100) according to one of claims 1 to 6, wherein said cleaning means (2) comprise an arc-shaped cleaning element (3) comprising an abrasive material and/or an electrostatic cloth positioned in the lower end portion of said cleaning means (2), and configured to be able to be put in direct contact with the rollers so as to clean and/or polish the outer surface of the rollers (20).

8. The rollers cleaning device (100) according to one of claims 1 to 7, wherein said cleaning means (2) comprise a cleaning element with blades (4) positioned in the lower end portion of said cleaning means (2) and configured so as to be able to be put in direct contact with the rollers (20) in order to remove foreign bodies which are positioned on the outer surface of the rollers (20).

9. The rollers cleaning device (100) according to one of claims 7 or 8, wherein said cleaning means (2) comprise at least two springs (42) configured to allow an adjustment of the angulation of said cleaning element (3, 4) with respect to the rollers (20).

10. The rollers cleaning device (100) according to one of claims 1 to 9, wherein said cleaning means (2) comprise a regulator (5) configured to adjust the contact force of said cleaning means (2) with the rollers (20).

11. Method for cleaning rollers through a rollers cleaning device according to one of claims 1-10, wherein said rollers cleaning device (100) is stopped at a predetermined position with respect to the rollers by lowering locking means (10) with respect to the frame (1) of said rollers cleaning device (100).

## Patentansprüche

1. Eine Rollenreinigungsvorrichtung (100) umfassend:
einen Tragrahmen (1);
eine Reinigungseinrichtung (2), die von dem Tragrahmen (1) so getragen werden, dass sie in Bezug auf den Tragrahmen (1) beweglich sind und so konfiguriert sind, dass sie in Kontakt mit den Rollen (20) gebracht werden und deren äußere Oberfläche reinigen;
ein oder mehrere Verriegelungsmittel (10), die konfiguriert sind, um den Tragrahmen (1) in einer vorbestimmten Position in Bezug auf die Rollen (20) zu fixieren, während die Rollen (20) bewegt werden;
die Rollenreinigungsvorrichtung (100) **ist darin charakterisiert dass**
die Verriegelungsmittel (10) so konfiguriert sind, dass sie in Bezug auf den Tragrahmen (1) vertikal bewegt werden können.

2. Das Rollenreinigungsvorrichtung (100) gemäß Anspruch 1, wobei
die Verriegelungsmittel (10) so konfiguriert sind, dass sie von einer Kontaktposition mit den Rollen (20) in eine Nichtkontaktposition und umgekehrt bewegt werden können.

3. Das Rollenreinigungsvorrichtung (100) gemäß Anspruch 1 oder 2, wobei
die Verriegelungsmittel (10) und der Tragrahmen (1) mittels eines oder mehrerer Aktuatoren (15) in vertikaler Richtung (Y) hin und her bewegt werden.

4. Das Rollenreinigungsvorrichtung (100) gemäß einem der Ansprüche 1 bis 3, wobei
während die Verriegelungsmittel (10) die Rollen (20) berühren, der Tragrahmen (1) in Bezug auf die Rollen (20) in einer berührungslosen Position positioniert ist und während der Tragrahmen (1) die Rollen (20) berührt, die Verriegelungsmittel (10) in einer berührungslosen Position relativ zu den Rollen (20) positioniert sind.

5. Das Rollenreinigungsvorrichtung (100) gemäß einem der Ansprüche 1 bis 4, wobei
die Verriegelungsmittel (10) Leerlaufdrehelemente (11) umfassen, die konfiguriert sind, um in den Raum zwischen zwei benachbarten Rollen (20) eingesetzt zu werden.

6. Das Rollenreinigungsvorrichtung (100) gemäß einem der Ansprüche 1 bis 5, wobei
der Tragrahmen (1) eine flache Bodenfläche (1a) hat, so dass, wenn die flache Bodenfläche (1a) die Rollen (20) berührt, die Rollenreinigungsvorrichtung (100) entlang der Förderrichtung (Z) der Rollen durch Rollen der Rollen (20) bewegt werden kann.

7. Das Rollenreinigungsvorrichtung (100) gemäß einem der Ansprüche 1 bis 6, wobei
die Reinigungseinrichtung (2) ein bogenförmiges Reinigungselement (3) aufweist, welches ein abrasives Material und/oder ein elektrostatisches Tuch aufweist, das in dem unteren Endabschnitt der Reinigungseinrichtung (2) angeordnet und so konfiguriert ist, dass es in direktem Kontakt mit den Rollen platziert werden kann, um die äußere Oberfläche der Rollen (20) zu reinigen und/oder zu polieren.

8. Das Rollenreinigungsvorrichtung (100) gemäß einem der Ansprüche 1 bis 7, wobei
die Reinigungseinrichtung (2) ein Reinigungselement mit Schneiden (4) umfasst, die im unteren Endabschnitt der Reinigungseinrichtung (2) positioniert und so konfiguriert sind, dass sie in direkten Kontakt mit den Rollen (20) gebracht werden können um Fremdkörper zu entfernen, die sich auf der Außenfläche der Rollen (20) befinden.

9. Das Rollenreinigungsvorrichtung (100) gemäß Anspruch 7 oder 8, wobei
die Reinigungseinrichtung (2) mindestens zwei Federn (42) umfasst, die so konfiguriert sind, dass sie eine Einstellung der Winkelstellung des Reinigungselements (3, 4) in Bezug auf die Rollen (20) ermöglichen.

10. Das Rollenreinigungsvorrichtung (100) gemäß einem der Ansprüche 1 bis 9, wobei
die Reinigungseinrichtung (2) einen Regler (5) aufweist, der konfiguriert ist, um die Kontaktkraft der Reinigungseinrichtung (2) mit den Rollen (20) einzustellen.

11. Methode um Rollen mit einer Rollenreinigungsvorrichtung gemäß einem der Ansprüche 1 bis 10 zu reinigen, wobei
die Rollenreinigungsvorrichtung (100) in Bezug auf die Rollen an einer vorbestimmten Position angehalten wird, indem die Verriegelungsmittel (10) in Bezug auf den Tragrahmen (1) der Rollenreinigungsvorrichtung (100) abgesenkt werden.

## Revendications

1. Dispositif (100) de nettoyage de rouleaux comprenant :
un cadre de support (1) ;
un moyen de nettoyage (2) supporté par ledit cadre (1) de façon à pouvoir être mobile par rapport audit cadre (1) et configuré de façon à être mis en contact avec les rouleaux (20) et à nettoyer la surface extérieure de ceux-ci ;
un ou plusieurs moyens de verrouillage (10) configurés de façon à fixer ledit cadre (1) dans une position prédéfinie par rapport aux rouleaux (20), tandis que l'on déplace les rouleaux (20) ;
ledit dispositif (100) de nettoyage de rouleaux étant **caractérisé en ce que**
lesdits moyens de verrouillage (10) sont configurés de façon à être déplacés verticalement par rapport audit cadre (1).

2. Dispositif (100) de nettoyage de rouleaux selon la revendication 1, dans lequel lesdits moyens de verrouillage (10) sont configurés pour être déplacés depuis une position de contact avec les rouleaux (20) jusqu'à une position de non-contact, et inversement.

3. Dispositif (100) de nettoyage de rouleaux selon l'une des revendications 1 ou 2, dans lequel lesdits moyens de verrouillage (10) et ledit cadre (1) sont déplacés réciproquement dans un sens vertical (Y) au moyen d'un ou plusieurs actionneurs (15).

4. Dispositif (100) de nettoyage de rouleaux selon l'une des revendications 1 à 3, dans lequel lorsque lesdits moyens de verrouillage (10) sont au contact des rouleaux (20), ledit cadre (1) est positionné dans une position de non-contact par rapport aux rouleaux (20), et lorsque ledit cadre (1) est au contact des rouleaux (20), lesdits moyens de verrouillage (10) sont positionnés dans une position de non-contact par rapport aux rouleaux (20).

5. Dispositif (100) de nettoyage de rouleaux selon l'une des revendications 1 à 4, dans lequel lesdits moyens de verrouillage (10) comprennent des éléments rotatifs libres (11) qui sont configurés pour être insérés dans l'espace entre deux rouleaux (20) adjacents.

6. Dispositif (100) de nettoyage de rouleaux selon l'une des revendications 1 à 5, dans lequel ledit cadre (1) comporte une surface de fond plane (1a) de sorte que lorsque ladite surface de fond plane (1a) est au contact des rouleaux (20), ledit dispositif (100) de nettoyage de rouleaux peut être déplacé suivant le sens de transport (Z) des rouleaux en faisant rouler lesdits rouleaux (20).

7. Dispositif (100) de nettoyage de rouleaux selon l'une des revendications 1 à 6, dans lequel ledit moyen de nettoyage (2) comprend un élément de nettoyage en forme d'arc (3) comprenant un matériau abrasif et/ou un chiffon électrostatique positionné dans la partie d'extrémité inférieure dudit moyen de nettoyage (2), et configuré pour pouvoir être mis en contact direct avec les rouleaux de façon à nettoyer et/ou polir la surface extérieure des rouleaux (20).

8. Dispositif (100) de nettoyage de rouleaux selon l'une des revendications 1 à 7, dans lequel ledit moyen de nettoyage (2) comprend un élément de nettoyage avec des lames (4) positionnées dans la partie d'extrémité inférieure dudit moyen de nettoyage (2) et configurées de façon à pouvoir être mises en contact direct avec les rouleaux (20) afin d'éliminer des corps étrangers qui sont positionnés sur la surface extérieure des rouleaux (20).

9. Dispositif (100) de nettoyage de rouleaux selon l'une des revendications 7 ou 8, dans lequel ledit moyen de nettoyage (2) comprend au moins deux ressorts (42) configurés pour permettre un réglage de l'inclinaison dudit élément de nettoyage (3, 4) par rapport aux rouleaux (20).

10. Dispositif (100) de nettoyage de rouleaux selon l'une des revendications 1 à 9, dans lequel ledit moyen de nettoyage (2) comprend un régulateur (5) configuré pour régler la force de contact dudit moyen de nettoyage (2) avec les rouleaux (20).

11. Procédé de nettoyage de rouleaux par le biais d'un dispositif de nettoyage de rouleaux selon l'une des revendications 1 à 10, dans lequel ledit dispositif (100) de nettoyage de rouleaux est arrêté à une position prédéterminée par rapport aux rouleaux en abaissant les moyens de verrouillage (10) par rapport au cadre (1) dudit dispositif (100) de nettoyage de rouleaux.
